Europäisches Patentamt

European Patent Office

Office européen des brevets

(19)

(11) Veröffentlichungsnummer: **0 135 609**
**B1**

(12) # EUROPÄISCHE PATENTSCHRIFT

(45) Veröffentlichungstag der Patentschrift:
27.01.88

(21) Anmeldenummer: 83109716.7

(22) Anmeldetag: 28.09.83

(51) Int. Cl.⁴: **G 01 C 19/64, H 01 S 3/083**

(54) **Einrichtung zum Messen einer Drehbewegung.**

(43) Veröffentlichungstag der Anmeldung:
03.04.85 Patentblatt 85/14

(45) Bekanntmachung des Hinweises auf die Patenterteilung:
27.01.88 Patentblatt 88/4

(84) Benannte Vertragsstaaten:
DE FR GB IT NL SE

(56) Entgegenhaltungen:
FR - A - 2 508 632

(73) Patentinhaber: Honeywell Regelsysteme GmbH,
Kaiserleistrasse 55, D-6050 Offenbach am Main (DE)

(72) Erfinder: Hansli, Werner, Dipl.-Ing., Moosbergstrasse 30,
D-6100 Darmstadt (DE)

(74) Vertreter: Herzbach, Dieter et al, Honeywell Europe S.A.
Holding KG Patent- und Lizenzabteilung
Kaiserleistrasse 55 Postfach 184, D-6050 Offenbach am
Main (DE)

## Beschreibung

Die vorliegende Erfindung bezieht sich auf eine Einrichtung nach dem Gattungsbegriff des Patentanspruches 1.

Eine derartige Einrichtung ist aus der DE-C-1 292 899 bzw. der FR-A-25 08 632 bekannt. Der dort dargestellte Ringlaserkreisel besitzt eine Resonatorstrecke, die entlang eines gleichseitigen Dreiecks verläuft. Um den bekannten Mitzieheffekt (lock-in) zu vermeiden, wird die dreieckförmige Resonatorstrecke in eine Schwingbewegung um eine senkrecht zur Ebene des dreieckförmigen Laserpfades gerichtete Achse versetzt. Die dreieckförmige Resonatorstrecke wird durch drei in den Eckpunkten des Dreiecks angeordnete Spiegel gebildet, wobei ein Spiegel teildurchlässig ist und eine Empfangsanordnung ortsfest diesem teildurchlässigen Auskoppelspiegel gegenüber angeordnet ist. Diese Empfangsanordnung umfasst ein Tripelprisma und im allgemeinen zwei Photodetektoren, die die Streifen eines entstehenden Interferenzmusters erfassen und einer Auswerteelektronik zuführen. Man hat dort festgestellt, dass bei einer Schwingung der dreieckförmigen Resonatorstrecke um die bei dem gleichseitigen Dreieck mit dem Schwerpunkt zusammenfallende Mittelachse der dabei erzeugte Frequenzunterschied nicht völlig durch die Phasenverschiebung ausgeglichen wird, die durch die Veränderung der Lage des Auskoppelspiegels zu dem Tripelprisma erzeugt wird. Durch Verlegung der Schwingungsachse aus der Mitte heraus, können diese geometrischen Verhältnisse derart geändert werden, dass eine Sinuswellenmodulation an der Empfangsanordnung ausgeschaltet wird.

Ein Versatz der Schwingungsachse um einen gewissen Betrag aus der Mitte führt aber bei der gleichseitigen, dreieckförmigen Ringlaserstruktur zu Unwuchtproblemen, da nunmehr die Schwingungsachse nicht mehr durch den Schwerpunkt der Struktur verläuft. Dies führt insbesondere bei Paketen mit mehreren Ringlaserkreiseln zu Taumelbewegungen und Messfehlern.

Es ist daher die Aufgabe der vorliegenden Erfindung, eine Einrichtung der eingangs genannten Art so auszubilden, dass diese Unwuchtprobleme einerseits nicht auftreten und andererseits das Messignal von den durch die mechanische Schwingbewegung hervorgerufenen Signalkomponenten unbeeinflusst bleibt. Die Lösung dieser Aufgabe gelingt gemäss den kennzeichnenden Merkmalen des Patentanspruches 1. Eine weitere vorteilhafte Ausgestaltung der erfindungsgemässen Einrichtung ist dem Unteranspruch entnehmbar.

Der vorliegenden Erfindung liegt die Erkenntnis zugrunde, dass es durch die Verwendung einer gleichschenkeligen Laserstruktur möglich ist, die Schwingungsachse so aus dem Mittelpunkt des Dreiecks zu verschieben, dass sie in dessen Schwerpunkt fällt. Hierdurch entfallen mit Vorteil jegliche Unwuchtprobleme und Messfehler aufgrund der Schwingungsbewegung werden zusätzlich vollständig kompensiert.

Anhand der Figuren der beiliegenden Zeichnung sei im folgenden ein Ausführungsbeispiel der erfindungsgemässen Einrichtung beschrieben. Es zeigt:

Fig. 1 die Strahlauskopplung bei einer bekannten Laserstruktur;

Fig. 2 die geometrischen Verhältnisse zwischen Auskoppelspiegel und Tripelprisma bei hin- und herbeweglichem Auskoppelspiegel in näheren Einzelheiten; und

Fig. 3 eine Laserstruktur gemäss der vorliegenden Erfindung.

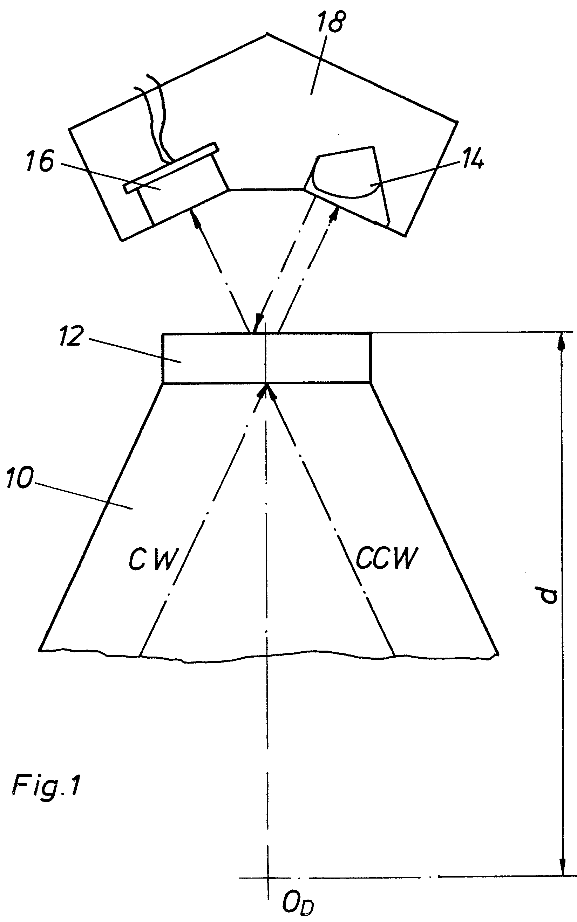

Figur 1 zeigt einen Ausschnitt aus einer aus der DE-PS 1 292 899 bekannten Laserstruktur 10 mit Auswerteanordnung 18. Die Laserstruktur 10 schwingt um eine zu der Laserstrecke senkrechte Achse $O_D$ hin und her. Die Achse $O_D$ besitzt von der Austrittsfläche eines Auskoppelspiegels 12 einen Abstand d. Der im Uhrzeigersinn verlaufende Laserstrahl cw durchsetzt den teildurchlässigen Auskoppelspiegel 12, wird durch ein Tripelprisma 14 auf den Auskoppelspiegel 12 zurückgeworfen und von dort auf eine Empfangsanordnung 16 reflektiert. Der im Gegenuhrzeigersinn verlaufende Laserstrahl ccw durchsetzt den Auskoppelspiegel 12 und fällt unmittelbar auf die Empfangsanordnung 16. Durch den geringen Überlagerungswinkel beider Strahlen entstehen Interferenzstreifen, die durch zwei Photosensoren in der Empfangsanordnung 16 als Impulse erfasst und einer nicht dargestellten Auswerteelektronik zugeführt werden.

Aus der Lasertheorie ist bekannt, dass ein Laser in Abhängigkeit von der Drehgeschwindigkeit folgendes Signal liefert:

$$\triangle \gamma = \frac{4 \cdot A}{L \cdot \lambda} \cdot \Omega \qquad (1)$$

Hierin bedeuten:

$\triangle \gamma$ Frequenzverschiebung zwischen den beiden gegensinnig umlaufenden Laserstrahlen in Å (1 Å = 0,1 nm)

A Vom Laserstrahl umschriebene Fläche in cm²

L Länge des Resonators in cm

$\lambda$ Wellenlänge der ausgewerteten Strahlung in Å

$\Omega$ Eingangswinkelgeschwindigkeit in rad/s

Ferner gilt folgende Beziehung:

$$n = \frac{4 \cdot A}{L \cdot \lambda} \cdot \varphi \qquad (2)$$

Hierin bedeuten abweichend von Gleichung (1):

n Anzahl der Impulse

$\varphi$ Drehwinkel in rad

Zur Beseitigung der durch die hin- und hergehende Schwingungsbewegung erzeugten Ausgangsimpulse werden das Tripelprisma 14 und die Empfangsanordnung 16 gehäusefest montiert. Hierdurch ändert sich die Weglänge für beide Laserstrahlen ausserhalb des Auskoppelspiegels 12 in Abhängigkeit von dem Schwingungswinkel. Durch entsprechende Wahl des Abstandes d zwischen dem Austrittspunkt des Strahles aus dem Auskoppelspiegel 12 und der Schwingungsachse $O_D$ wird erreicht, dass die Weglängendifferenz beider Strahlen pro Schwingungswinkel $\varphi$ dem Betrag $n \cdot \lambda$ entspricht. Aufgrund dieser Weglängendifferenz entstehen ebenfalls Interferenzstreifen, die von den Photosensoren ausgewertet werden, sich aber aufheben, wenn der Abstand d entsprechend gewählt ist.

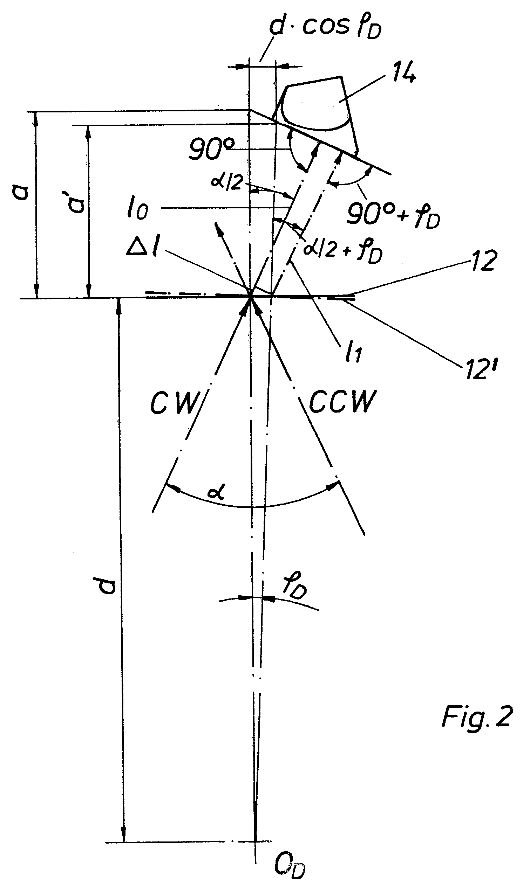

Anhand von Figur 2 sei nun hergeleitet, welche Weglängenverschiebung sich zwischen den beiden Strahlen aufgrund der hin- und hergehenden Schwingungsbewegung der Laserstruktur um die Achse $O_D$ ergibt und welche Folgerungen für den Abstand d der Achse $O_D$ von der Strahlaustrittsfläche aus dem Auskoppelspiegel 12 zu ziehen sind. Die Schwingungen erstrecken sich über einen kleinen Winkel $\varphi_D$ und die beiden Strahlen cw und ccw schliessen den Winkel $\alpha$ ein. Die Nullstellung des Auskoppelspiegels und die Stellung im Umkehrpunkt der Schwingungsbewegung sind mit 12 und 12' bezeichnet.

Für die Berechnung der Längenänderungsdifferenz zwischen beiden Strahlen ist nur die Strekke des Strahls zwischen dem Auskoppelspiegel 12 und dem Tripelprisma 14 und zurück von Interesse, da alle anderen Wege für beide Strahlen gleich sind. Der Weg der Strahlen im Tripelprisma kann in erster Näherung als konstant angenommen werden. Es gilt also:

$$\triangle 1 = 2 \cdot (1_0 - 1_1)$$

Aufgrund der geometrischen Verhältnisse ergibt sich folgendes:

$$1_0 = a \cdot \cos \alpha/2 \text{ und}$$

$$1_1 = a' \cdot \frac{\cos \alpha/2}{\cos \varphi_D}$$

Mit $\quad a' = a - d \cdot \sin \varphi_D \cdot \tan \alpha/2$

ergibt sich:

$$1_1 = a \cdot \frac{\cos \alpha/2}{\cos \varphi_D} - d \cdot \tan \varphi_D \cdot \sin \alpha/2$$

Somit gilt für $\triangle 1$:

$$\triangle 1 = 2 \cdot (a \cdot \cos \alpha/2 - a \cdot \frac{\cos \alpha/2}{\cos \varphi_D} + d \cdot \tan \varphi_D \cdot \sin \alpha/2)$$

Unter Berücksichtigung der Tatsache, dass $\varphi_D$ ein sehr kleiner Winkel ist, gilt:

$$\triangle 1 = 2 \cdot d \cdot \tan \varphi_D \cdot \sin \alpha/2$$

Andererseits soll $\triangle \lambda$ ein ganzzahliges Vielfaches der Wellenlänge $\lambda$ der ausgewerteten Strahlung sein, d.h.:

$$\triangle 1 = n \cdot \lambda$$

so dass gilt:

$$n \cdot \lambda = 2 \cdot d \cdot \sin \alpha/2 \cdot \varphi_D \qquad (3)$$

$(\varphi_D = \tan \varphi_D$ für kleine Winkel $\varphi_D)$

Gleichung (2) lässt sich in gleicher Form wie folgt schreiben

$$n \cdot \lambda = \frac{4 \cdot A}{L} \cdot \varphi_D \qquad (4)$$

Setzt man die rechten Seiten der Gleichungen (3) und (4) gleich, so ergibt sich:

$$d \cdot \sin \alpha/2 = \frac{2A}{L} \qquad (5)$$

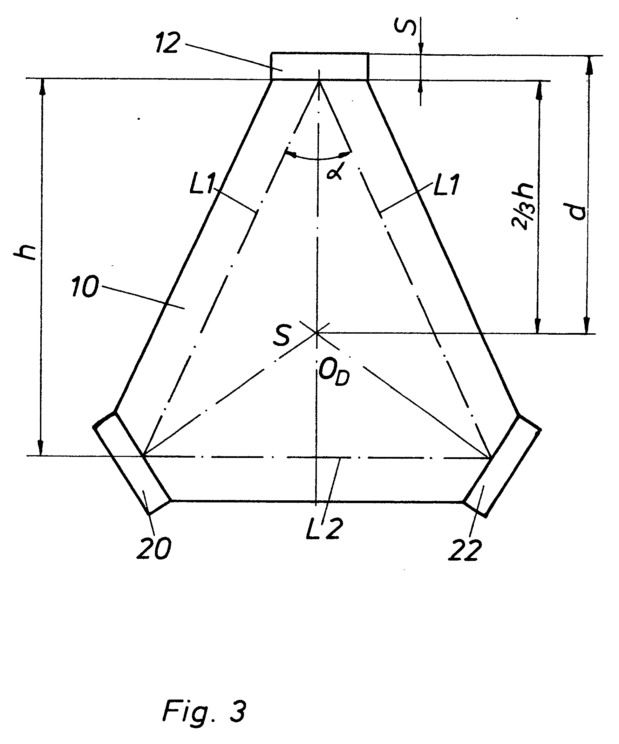

Gleichung (5) stellt die zu lösende Bestimmungsgleichung dar. Anhand von Fig. 3 sei nun gezeigt, dass die konstruktive Lösung dieser Bestimmungsgleichung zu einem gleichschenkligen Dreieck führt, wenn die zusätzliche Forderung erfüllt sein soll, dass die Schwingungsachse $O_D$ mit dem Schwerpunkt S des Dreiecks zusammenfallen soll. Für das in Fig. 3 gezeigte Dreieck gilt folgendes:

| | |
|---|---|
| Laserpfadlänge | $L = 2 L_1 + L_2$ |
| Laserfläche | $A = (1/2) h \cdot L_2$ |
| Abstand | $d = (2/3) h + s$ |

Andererseits bestehen folgende Beziehungen:

$$L_1 = \frac{h}{\cos \alpha/2} \qquad \text{und}$$

$$L_2 = 2 \cdot h \cdot \tan \alpha/2$$

so dass sich ergibt:

$$L = \frac{2h}{\cos \alpha/2} + 2h \cdot \tan \alpha/2 \qquad \text{und}$$

$$A = h^2 \cdot \tan \alpha/2$$

Setzt man obige Werte in die Bestimmungsgleichung (5) ein, so erhält man:

$$( (2/3) h + s) \cdot \sin \alpha/2 = \frac{2h^2 \cdot \tan \alpha/2}{\dfrac{2h}{\cos \alpha/2} + 2h \cdot \tan \alpha/2}$$

$$( (2/3) h + s) \cdot \sin \alpha/2 = \frac{h \cdot \dfrac{\sin \alpha/2}{\cos \alpha/2}}{\dfrac{1}{\cos \alpha/2} + \dfrac{\sin \alpha/2}{\cos \alpha/2}}$$

$$(2/3)\ h+s = \frac{h}{1+\sin \alpha/2} \qquad (6)$$

Mit dieser Gleichung (6) lässt sich nun bei gegebener Höhe h der Laserstruktur und bei gegebener Dicke s des Auskoppelspiegels 12 der Winkel $\alpha$ berechnen, den die Schenkel des Dreiecks miteinander einschliessen. Mit der Höhe h und dem Winkel $\alpha$ liegt aber die Struktur des Dreiecks fest. Dieses Dreieck ist ein gleichschenkliges Dreieck.

## Patentansprüche

1. Einrichtung zur Messung einer Drehbewegung, insbesondere Ringlaserkreisel, mit einer im wesentlichen dreiecksförmigen Laserstruktur (10), die um eine durch ihren Schwerpunkt (S) verlaufende Schwingungsachse ($O_D$) hin- und herbewegt werden kann, mit einer dreiecksförmigen Resonatorstrecke ($L_1$, $L_2$), die von zwei Spiegeln (20, 22) und einem Auskoppelspiegel (12), die jeweils in einem Eckbereich der Laserstruktur (10) angeordnet sind, gebildet ist, deren Seiten parallel zu und in einer Ebene mit den Seiten der Laserstruktur (10) verlaufen und deren geometrischer Schwerpunkt mit dem Schwerpunkt (S) der Laserstruktur (10) zusammenfällt, und mit einer Auswerteanordnung (18), die ausserhalb der Resonatorstrecke ($L_1$, $L_2$) gegenüber dem Auskoppelspiegel (12) ortsfest angeordnet ist und ein Prisma (14) sowie eine Empfangsanordnung (16) umfasst, wobei entlang der Resonatorstrecke ($L_1$, $L_2$) zwei elektromagnetische Strahlen annähernd gleicher Frequenz gegensinnig rotieren und ein Mitzieheffekt durch die Hin- und Herbewegung der Laserstruktur (10) verhindert wird, dadurch gekennzeichnet, dass die Laserstruktur so ausgebildet ist, dass die Resonatorstrecke ein gleichschenkliges Dreieck ist, dessen Schenkel ($L_1$) länger als die Grundlinie ($L_2$) sind und das folgender Bedingung genügt:

$$(2/3)\ h+s = \frac{h}{1+\sin(\alpha/2)}$$

wobei:

h = Höhe des Dreiecks

s = Dicke des Auskoppelspiegels (12)

$\alpha$ = Winkel, den die beiden Schenkel des Dreiecks miteinander einschliessen.

2. Einrichtung nach Anspruch 1, dadurch gekennzeichnet, dass der Auskoppelspiegel (12) in dem Eckbereich der dreiecksförmigen Laserstruktur (10) angeordnet ist, in dem die beiden gleich langen Schenkel ($L_1$ bzw. $L_2$) der dreiecksförmigen Resonatorstrecke zusammenlaufen.

## Revendications

1. Dispositif pour mesurer un mouvement de rotation, notamment un gyroscope à laser en anneau, comportant une structure laser (10) de forme sensiblement triangulaire, qui peut avoir un déplacement en va-et-vient autour d'un axe d'oscillation ($O_D$) passant par le centre de gravité (S) de cette structure, un trajet de résonance de forme triangulaire ($L_1$, $L_2$), qui est formé par deux miroirs (20, 22) et un miroir de découplage (12), qui sont disposés chacun dans une zone d'angle de la structure laser (10), et dont les côtés sont parallèles à et situés dans un plan contenant les faces de la structure laser (10) et dont le centre de gravité géométrique coïncide avec le centre de gravité (S) de la structure laser (10), et un analyseur (18) qui est monté fixe en vis-à-vis du miroir de découplage (12) à l'extérieur du trajet de résonance ($L_1$, $L_2$), et comporte un prisme (14) ainsi qu'un dispositif de réception (16), et dans lequel deux rayonnements électromagnétiques possédant approximativement la même fréquence tournent en des sens opposés le long du trajet de résonance ($L_1$, $L_2$), et dans lequel un effet de verrouillage est empêché grâce au déplacement en va-et-vient de la structure laser (10), caractérisé en ce que la structure laser est agencée de telle sorte que le trajet de résonance est un triangle isocèle, dont les côtés égaux ($L_1$) sont plus longs que la base ($L_2$) et qui satisfait à la condition suivante:

$$(2/3)\ h+s\ \frac{h}{1+\sin (\alpha/1)}$$

avec:

h = hauteur du triangle

s = épaisseur du miroir de découplage (12)

$\alpha$ = angle que font entre eux les deux côtés égaux du triangle.

2. Dispositif selon la revendication 1, caractérisé en ce que le miroir de découplage (12) est disposé dans la zone d'angle de la structure laser de forme triangulaire (10), au niveau de laquelle les deux côtés égaux ($L_1$ et $L_2$) du trajet de résonance de forme triangulaire se rejoignent.

## Claims

1. Apparatus for measuring a rotary motion, in particular ring laser gyroscope comprising a laser structure (10) of a substantial triangular shape, which may be oscillated about an axis of oscillation ($O_D$) traversing the center of gravity (S), comprising a triangular-shaped resonator path ($L_1$, $L_2$) being formed by two mirrors (20, 22) and an output mirror (12), with said mirrors each being arranged in the corner area of said laser structure (10), with the side walls of said path being parallel to and in the same plane as the side faces of the laser structure (10) and with the geometrical point of gravity coinciding with the center of gravity (S) of said laser structure (10) and further comprising an evaluating device (18) being stationarily arranged outside of the resonator path ($L_1$, $L_2$) adjacent to the output mirror (12) and comprising a prism (14) and a receiving device (16), whereat two electromagnetic waves of nearly the same frequency rotate in opposite direction along the resonator path ($L_1$, $L_2$) and a lock-in effect is prevented by said oscillation of said laser structure (10), characterized in that the laser structure is constructed in such a way that the resonator path is an equal-sided triangle with its leg ($L_1$) being longer than the base leg ($L_2$) and satisfying the following condition:

$$(2/3)\ h + s = \frac{h}{1 + \sin(\alpha/2)}$$

whereat:

   h = height of the triangle

   s = thickness of the output mirror (12)

   $\alpha$ = angle formed by the two legs of the triangle.

2. Apparatus according to claim 1, characterized in that the output mirror (12) is arranged in the corner area of the triangular-shaped laser structure (12), where the legs (L$_1$) having the same length converge.

Fig.1

Fig. 2

Fig. 3